**Europäisches Patentamt**

(19) **European Patent Office**

**Office européen des brevets**

(11) Veröffentlichungsnummer : **0 050 737**
**B1**

(12) **EUROPÄISCHE PATENTSCHRIFT**

(45) Veröffentlichungstag der Patentschrift :
**23.05.84**

(51) Int. Cl.³ : **G 11 B 15/60**, G 11 B 15/29,
G 11 B 15/22

(21) Anmeldenummer : **81107455.8**

(22) Anmeldetag : **19.09.81**

(54) **Umlenkeinrichtung für einen bandförmigen Aufzeichnungsträger, insbesondere für ein Magnetband.**

(30) Priorität : **27.10.80 DEU 8028597**

(43) Veröffentlichungstag der Anmeldung :
**05.05.82 Patentblatt 82/18**

(45) Bekanntmachung des Hinweises auf die Patenterteilung : **23.05.84 Patentblatt 84/21**

(84) Benannte Vertragsstaaten :
**AT BE CH DE FR GB LI NL SE**

(56) Entgegenhaltungen :
**EP-A- 0 007 494**
**DD-A-    85 101**
**DE-A- 2 125 399**
**DE-A- 2 722 509**
**DE-B- 1 295 012**
**DE-B- 2 350 816**
**US-A- 4 110 670**

(73) Patentinhaber : **BASF Aktiengesellschaft**
**Carl-Bosch-Strasse 38**
**D-6700 Ludwigshafen (DE)**

(72) Erfinder : **Schoettle, Klaus**
**Ladenburger Strasse 70**
**D-6900 Heidelberg (DE)**
Erfinder : **Ilmer, Andreas, Dr.**
**Londoner Ring 15**
**D-6700 Ludwigshafen (DE)**
Erfinder : **Flohr, Joachim**
**Jägerstrasse 1**
**D-6806 Viernheim (DE)**

Jouve, 18, rue St-Denis, 75001 Paris, France

**Beschreibung**

Die Erfindung betrifft eine Umlenkeinrichtung für einen bandförmigen Aufzeichnungsträger, insbesondere ein Magnetband, das in seiner Längsrichtung starken Beschleunigungen unterworfen wird, bei welcher wenigstens eine auf einer Lagervorrichtung drehbare Umlenkrolle vorgesehen ist, worüber das transportierte Band geführt ist.

Eine derartige Umlenkeinrichtung soll insbesondere bei nach dem Kontaktwickel-Prinzip arbeitenden Magnetbandgeräten (sogenannten Schnelläufern) einsetzbar sein. Bei portablen, kleinen Video-Aufzeichnungs-Geräten, bei denen jegliche Wartung vermieden werden soll, ist die Umlenkeinrichtung gemäß im folgenden zu beschreibender Erfindung besonders vorteilhaft anwendbar.

In bekannten Rollenumlenkeinrichtungen für Magnetbänder bemüht man sich gewöhnlich, die Drehreibung der Rolle(n) gegenüber dem Lager niedrig zu halten und hinsichtlich des Band-Rollenflächenkontakts, die Flächen so aneinander anzupassen, daß Bandschlupf verhindert wird und die Rolle ständig mitgedreht wird.

Ein Beispiel ist in der DE-AS 16 25 592 beschrieben, worin die Rolle mittels Kugellager praktisch reibungsfrei gelagert ist. Um die Längsschwingungen eines in seiner Längsrichtung einer starken Beschleunigung unterworfenen Magnetbandes zu dämpfen, ist es gemäß DE-PS 12 49 340 bekannt, die Führungsrolle mit Samt zu überziehen, wobei die Samthaare dem Magnetband zugewandt sein sollen. Die Länge der Haare liegt bei Halbzollband bei ca. 5 mm.

Hinsichtlich Band-Rollenflächenkontakt ist diese Samtauflage nicht günstig, da Schupf auftritt.

Es ist mit der DE-PS 705 813 ferner für eine Tonfilmvorrichtung bekannt, vor der Tonrolle eine Bremsrolle für den Film vorzusehen, damit der Film auf der Tonrolle die erforderliche Spannung zur Mitnahme der Schwungmasse erhält, und somit das Auftreten von Schlupf vermieden wird.

Mit der US-PS 3 593 945 ist ferner ein Magnetbandlaufwerk nach dem Kontaktwickelprinzip (« Schnelläufer ») bekannt, in dem feststehende Führungszapfen benutzt werden. Das Band kommt dabei unvermeidbar in Kontakt mit der Führungsfläche und es treten Verschleiß und Störungen im Bandlauf auf.

Es sind weiterhin stationäre Luftführungen für Magnetbandgeräte bekannt, wobei ein Luftpolster den Kontakt des Bandes mit der Führungsfläche weitgehend verhindert (z. B. FR-PS 1 197 820). Der Aufwand solcher Luftführungen ist beträchtlich groß.

Die vorliegende Erfindung hat sich die Aufgabe gestellt, die Umlenkeinrichtungen, insbesondere für schnellaufende Magnetbandgeräte zu verbessern, um die Störsignale bei Aufnahme/Wiedergabe aufgezeichneter Signale zu reduzieren bei geringstmöglichem Aufwand.

Diese Aufgabe wird gelöst, wenn an der Umlenkeinrichtung gemäß Einleitung ein Hemmoment zwischen der Umlenkrolle und der Lagervorrichtung erzeugt wird, dessen Größe einer am Rollenumfang angreifenden Reibkraft zwischen 0,02 und 0,15 N (2 und 15 Pond), vorzugsweise zwischen 0,02 und 0,1 N (2 und 10 Pond) entspricht.

Dadurch wird funktionsmäßig erreicht, daß die Rolle oberhalb einer Mindest-Bandtransportgeschwindigkeit feststeht und sich im wesentlichen nur dreht, wenn infolge einer sehr glatten Ausbildung der Kontaktfläche zwischen Rolle und Band letzteres an dieser Fläche klebt, oder, wenn die Mindestgeschwindigkeit des Bandes nicht erreicht wird. Der Effekt, daß die Rolle stehenbleibt beim Bandtransport wird erfindungsgemäß bewußt herbeigeführt, obwohl er bei allen bisher bekannten Magnetbandlaufwerken mit allen Mitteln, wie auch der oben zitierte Stand der Technik zeigt, vermieden wird.

Da das Hemmoment durch einfache Bremsvorrichtungen erzeugbar und einstellbar ist, ist die erfindungsgemäße Lösung auch mit geringem Aufwand realisierbar. In jedem Fall kann ein Unrundlaufen der Rolle kompensiert werden. In weiterer Ausführung kann die Rolle mit einer Oberflächenrauhigkeit Ra von weniger als 0,5 $\mu$m, insbesondere unter 0,28 $\mu$m ausgebildet sein. Dadurch wird die Ausbildung eines die Reibung zwischen Band und Rolle vermindernden Luftfilms begünstigt. Dieser Luftfilm wird im wesentlichen aus der Grenzschicht der vom Band mitgeschleppten Luft gebildet.

In weiterer Ausbildung kann die Umlenkrolle mit Höhenführungsflanschen versehen sein, die auch mit der Lagervorrichtung fest verbunden sein können. Diese Flansche können sich auch nur um einen Teil des Rollenumfangs erstrecken und Einlauf- und Auslaufanfasungen für das Band aufweisen. Dadurch wird die Bandbeanspruchung verringert bei Erhöhung der Höhenführung.

In weiteren Ausführungen kann entweder eine einzige oder es können zwei Umlenkrollen vorgesehen sein, wobei der Magnetkopf jeweils zwischen Bandrolle und Umlenkrolle oder zwischen den Umlenkrollen anzuordnen ist.

Die oben angedeutete Erzeugung einer Grenzschicht hat die Voraussetzung, daß das Band mit hoher Geschwindigkeit über die Rolle transportiert wird und daß ein ausreichender Bandzug aufrechterhalten wird und Oberflächenrauhigkeiten unter 0,5 $\mu$m auf der Rollenfläche vorhanden sind.

Zwischen der Rollenfläche, wo die Luft die Geschwindigkeit Null besitzt, also daran haftet und dem Band, befindet sich eine dünne Übergangssicht — die sogenannte Grenz- oder Reibungsschicht, in welcher ein starker Geschwindigkeitsanstieg von Null bis zur Bandgeschwindigkeit stattfindet. Diese Schicht ist aufteilbar in einen Bereich mit annähernd reibungsfreier Bewegung und die Grenzschicht, in der wegen des großen Geschwindigkeitsgradientens trotz kleiner Zähigkeit der Luft erhebliche Reibungswirkungen ausgelöst werden. Für die Grenzschicht gelten die Navier-Stokeschen-Gleichungen vgl. auch W. Kauffmann « Technische Hydro- und Aerodynamik », Springer Verlag 1963, S. 233 bis 240, insbesondere die Prandtlische Grenzschichttheorie. Über die Luftfilmlagerung beim Transport eines Bandes über eine Rolle s. W.A. Gross « Gas Film Lubrication », John Wiley and Sons Inc., New York/London, insbesondere seiten 138 bis 141.

Es hat sich überraschenderweise in der Praxis herausgestellt, daß die Ausbildung des Luftfilms am günstigsten ist, wenn die Rolle steht, weil dann die Reibkraft, die indirekt vom Band auf die Rolle ausgeübt wird, gerade kompensiert wird. Wird die zur Ausbildung der Grenzschicht notwendige Mindestgeschwindigkeit unterschritten, so wird infolge der Vergrößerung der auf die Rolle ausgeübten indirekten Reibkraft die Rolle mitgedreht, wodurch Schlupf zwischen Rolle und Band vermieden wird.

Einzelheiten der erfindungsgemäßen Umlenkeinrichtung sind schematischen, in der Zeichnung dargestellten und im folgenden beschriebenen Ausführungsbeispielen zu entnehmen.

In der Zeichnung ist dargestellt in

Figur 1 ein schematischer Kontaktwickel-Transport mit Bandumlenkrolle

Figur 2 eine Bandumlenkrolle mit Festflanschen und einer Wirbelstrom- oder Hysteresebremse

Figur 3 eine weitere Bandumlenkrolle mit intergrierten Flanschen und einer Blockbremse

Figur 4 ein Diagramm Reibkraft einer Blockbremse als Funktion der Bandgeschwindigkeit

Figuren 5a und 5b Kurvendiagramme der Zeitbasisfehler über der Frequenz

Ein Schnelläuferlaufwerk 5 besteht im wesentlichen aus der Antriebsrolle 6, die zwischen dem Aufwickel 7 und dem Abwickel 8 angeordnet ist und bei der angegebenen Drehrichtung a) den Aufwickel in der Richtung b) und den Abwickel in der Richtung c) antreibt. Auf einer gemeinsomen Achse zwischen Aufwickel 7 und Abwickel 8 und in derselben Ebene mit der Antriebsrolle 6 ist eine Umlenkrolle 9 angeordnet, über deren Umfang das Band 10 geführt ist. Wie schematisch angedeutet, kann auf der freien Bandlänge zwischen Antriebsrolle 6 und Umlenkrolle mindestens ein Aufzeichnungs- und/oder Abtastkopf 11 angeordnet sein. Je nachdem wie das Band 10 auf dem Abwickel 8 aufgewickelt ist, ist der Kopf 11 innerhalb oder außerhalb der Bandschlaufe angeordnet. Im vorliegenden Fall, da die Folienseite des Bandes 10 auf den Wickeln nach innen gewickelt ist, ist der Kopf 11 innerhalb der Schlaufe vorgesehen.

Über einen elastisch verformbaren Umfangsrand an der Antriebsrolle 6 werden die mittels nicht dargestellter Andruckvorrichtungen an die Rolle 6 angedrückten — Auf — und Abwickel 7 bzw. 8 fast schlupflos angetrieben, wodurch ein Hochgeschwindigkeits-Bandtransport, insbesondere für dünne und sehr dünne Magnetbänder mit einer Gesamtdicke von 15 µm oder 9 µm oder darunter, erreichbar ist.

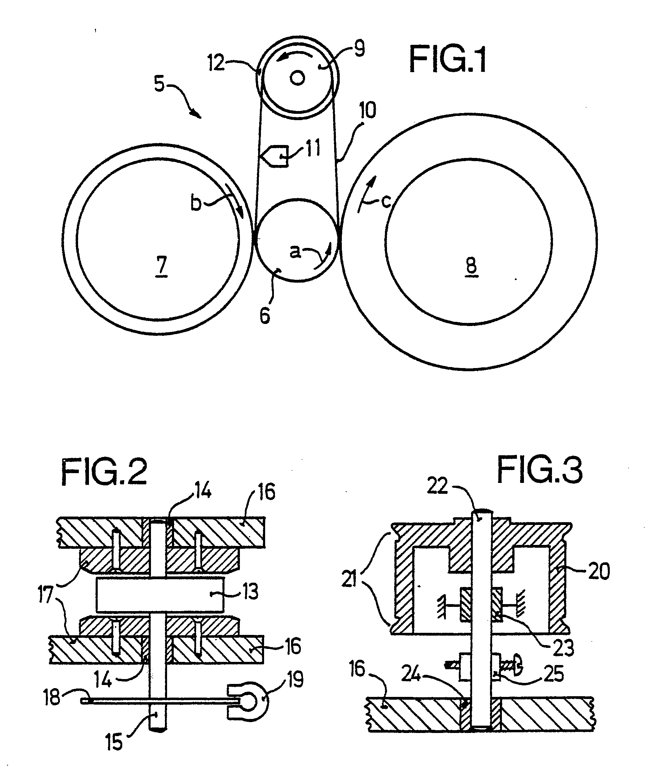

Die Umlenkrolle 9 besitzt in jedem Falle Höhenführungsflansche 12 für das Band 10, die entweder als mitdrehende Flansche 21 (Fig. 3) oder als feste Flansche 17 (Fig. 2) ausgebildet sind.

Es hat sich in der Praxis herausgestellt, daß bei ständig mitdrehender Rolle 9 das Band an einigen Stellen am Umfang ständig in Kontakt mit der Rollenfläche steht und ein Schleifvorgang stattfindet, der im Extremfall einer genügend glatten Rollenstelle ein Kleben des Bandes 10 bewirkt. Insbesondere bei ständigem Richtungswechsel des Bandtransports findet auch wechselnder Kontakt mit Stellen der Rollenfläche statt. Dadurch wird das Band wechselnden Bandzügen unterworfen, was sich als Bandflutter, insbesondere bei Zeitbasisfehlermessungen bei Fernsehsignalaufzeichnungen bemerkbar macht.

Erfindungsmäßig wurde überraschend festgestellt, daß bei definierter Bremsung der Rolle die Bandfluttereinflüsse verringerbar sind und bei Bremsung der Rolle bis zum Stillstand, der von der Rolle sonst erzeugte Zeitbasisfehler völlig eliminiert werden kann. Als Ursache dieser erheblichen Verbesserung wird die Erzeugung einer Grenzschicht angesehen, die den Bandtransport auf einer Luftschicht über die Rollenfläche ermöglicht. Ein Restreibwert nach Erzeugung der Grenzschicht wird als Hemmoment an der Rolle aufgebracht, um bei und oberhalb einer Mindestbandgeschwindigkeit, die etwa im Bereich von 2-4 m/s liegt, einen Rollenstillstand zu erreichen. Fällt diese Geschwindigkeit unter den Mindestwert ab z. B. beim Richtungswechsel oder beim Anfahren oder Auslaufen des Laufwerks, so dreht sich die Rolle wieder aufgrund der dann reduzierten bzw. fehlenden Grenzschicht und des daraus resultierenden höheren Restreibwertes zwischen Band und Rolle. Der Restreibwert ist, wie aus den in der Einleitung genannten Literaturstellen hervorgeht, vom Bandzug abhängig, es ist daher zweckmäßig, das Hemmoment an der Umlenkrolle mittels einer einstellbaren Bremseinrichtung zu erzeugen. Verwendbare Bremseinrichtungen sind in den Figuren 2 und 3 dargestellt.

Eine zylinderförmige Umlenkrolle 13 ist mit einer drehbar in Lagern 14 gelagerten Achse 15 fest verbunden. Die Lager 14 sind in Chassisteilen 16 des Laufwerks 5 vorgesehen. Mit den Teilen 16 sind ebenfalls Höhenführungsflansche 17 fest verbunden, die zumindest im Umschlingungsbereich des Bandes 10 angeordnet sind. Mit dieser Kombination einer Drehrolle 13 mit Festflanschen 17 ist es bereits möglich, auftretende Bandflutter-Störungen des Laufwerks zu vermindern.

Am unteren Ende der Achse 15 kann eine Metallscheibe 18 befestigt sein, die in den Luftspalt einer Dauermagnet- oder Elektromagneteinrichtung 19 heineinragt. Je nachdem, ob das Metall leitfähig oder magnetisch ist, wird damit eine Wirbelstrombremse oder eine Hysteresebremse geschaffen, deren Bremskraft entweder bei einem Dauermagnet entsprechend fest oder bei einem Elektromagnet variabel einstellbar ist.

In Figur 3 ist eine hutförmige Rolle 20 mit integrierten Flanschen 21 auf einer fest verbundenen Achse 22, die wiederum an Chassisteilen 16 drehbar gelagert ist, dargestellt. Eine Lagerstelle 23 befindet sich innerhalb der Rolle 20, die andere 24 außerhalb. Zwischen den Lagerstellen 23 und 24 ist eine durch Bremsblöcken und Schraube dargestellte Blockbremse 25 vorgesehen, womit eine definierte Bremskraft an der Achse 22 fest einstellbar ist.

Die beschriebenen Bremsvorrichtungen 18, 19 und 25 stehen Stellvertretend für alle überhaupt verwendbaren Arten und Ausführungen solcher Vorrichtungen. Außer den beschriebenen Beispielen sind dem Fachmann beispielsweise noch folgende Arten von Bremsvorrichtungen bekannt: Freilaufbremsen, Scheibenbremsen, Lagerwiderstandsbremsen, Massenträgheitsbremsen, Viskositätsbremsen und Lamellenbremsen. Welche der Fachmann davon auswählt, hängt von den jeweiligen Gegebenheiten ab.

In jedem Fall sollte die gewählte Bremse zur Erzeugung eines Hemmoments entsprechend einer Reibkraft am Umfang der Rolle zwischen 0,02 und 0,15 N (2 und 15 Pond), vorzugsweise zwischen 0,02 und 0,1 N (2 und 10 Pond), geeignet sein. Bei einem Rollendurchmesser von 17,5 mm entsprechen die Reibkräfte einem Moment von ca. $0,18 \cdot 10^{-3}$ Nm bis 1,35 Nm und vorzugsweise bis $0,9 \cdot 10^{-3}$ Nm. Bei einem Bandtransport der schematisch beschriebenen Art sind beispielsweise die folgenden Werte gegeben:

Durchmesser der Umlenkrolle $d = 17,5$ mm,

Abstand der Höhenführungsflansche b = 8,05 mm bei 8 mm,

Bandbreite Umschlingungsbogen des Bandes c = 13,7 mm,

Bandgeschwindigkeit v = 4 m/s, Mittenrauhigkeit der Rollenfläche 0,25 μm,

Bandzugkraft 0,4 N ≤ B ≤ 0,6 N (40 Pond ≤ B ≤ 60 Pond).

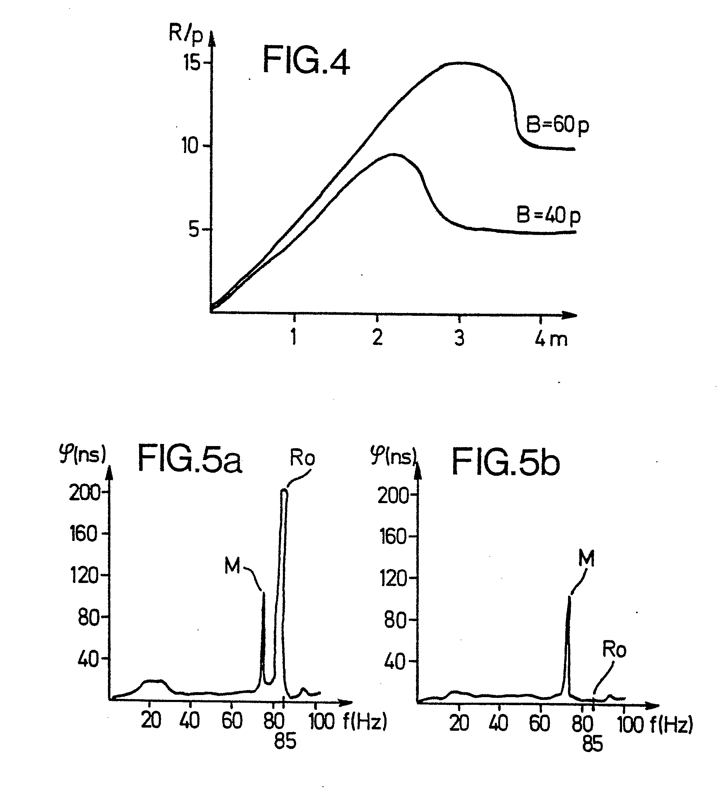

Der Verlauf der Reibkraft R in Abhängigkeit von der Bandgeschwindigkeit ist für die Bandzugkräfte B = 40 Pond und 60 Pond in Figur 4 schematisch dargestellt. Es wird deutlich, daß für eine Mindestgeschwindigkeit, bei der die Grenzschicht erzeugt wird, die Reibkraft deutlich abfällt, im vorliegenden Beispiel zwischen 2,5 und 3 m/s bzw. zwischen 3,5 und 4 m/s.

In Figur 5 sind zwei Oszillogramme betreffend den Zeitbasisfehler f in Nanosecunden (ns) in Abhängigkeit von der Frequenz f in Hertz (Hz) dargestellt. Mit M ist das Fehlersignal des Motors der Antriebsrolle 6 und mit Ro das jeweilige Fehlersignal der Umlenkrolle 9, im Beispiel in der Ausführung der Hutrolle 20, bezeichnet.

Im Meßdiagramm 5a beträgt der Zeitfehler des Motors M etwa 200 ns. Diesem Meßdiagramm lag eine Versuchsanordnung mit einer freilaufenden, ungebremsten Umlenkrolle 20 zugrunde, wobei die Unrundheit der Rolle weniger als 4 μm betrug, was herstellungsmäßig sehr aufwendig ist. Das Meßdiagramm 5b wurde dagegen mit derselben Umlenkrolle 20, die jedoch erfindungsgemäß definiert gebremst war, wiederum mit den Werten des genannten Beispiels aufgenommen.

Es ergab sich bei etwa unverändertem Fehlersignal M des Motors ein nicht mehr sichtbares Fehlersignal Ro, was einer Fehlersignalverbesserung von 2 ns/200 ns = − 40 dB entspricht.

## Ansprüche

1. Umlenkeinrichtung für einen bandförmigen Aufzeichnungsträger, insbesondere ein Magnetband (10), das in seiner Längsrichtung starken Beschleunigungen unterworfen wird, bei welcher wenigstens eine auf einer Lagervorrichtung (14, 15 bzw. 22, 23, 24) drehbare Umlenkrolle (9, 13, 20) vorgesehen ist, worüber das transportierte Band (10) geführt ist, gekennzeichnet durch ein Hemmoment zwischen der Umlenkrolle (9, 13, 20) und der Lagervorrichtung (14, 15 bzw. 22, 23, 24) dessen Größe einer am Rollenumfang angreifenden Reibkraft zwischen 0,02 und 0,15 N (2 und 15 Pond), vorzugsweise zwischen 0,02 und 0,1 N (2 und 10 Pond) entspricht.

2. Einrichtung nach Anspruch 1, dadurch gekennzeichnet, daß die Umlenkrolle (9, 13, 20) eine Rauhigkeit Ra von weniger als 0,5 μm, insbesondere von weniger als 0,28 μm aufweist.

3. Einrichtung nach Anspruch 1 oder 2, dadurch gekennzeichnet, daß die Umlenkrolle (20) mit Höhenführungsflanschen (21) ausgebildet ist, die einen etwas größeren Abstand als die Bandbreite aufweisen (Figuren 2 und 3).

4. Einrichtung nach Anspruch 1 oder 2, dadurch gekennzeichnet, daß die Umlenkrolle (20) mit Höhenführungsflanschen (17) ausgebildet ist, die fest mit der Lagervorrichtung verbunden sind (Figur 2).

5. Einrichtung nach Anspruch 4, dadurch gekennzeichnet, daß die Höhenführungsflansche (17) um einen Teil des Umfangs der Umlenkrolle (n) (13) angeordnet sind und am Beginn und Ende der Führungsflansche Einlauf- bzw. Auslaufanfasungen für das Band (10) vorgesehen sind.

6. Einrichtung nach Anspruch 3 oder 5, dadurch gekennzeichnet, daß eine einzige Umlenkrolle (9) vorgesehen ist, und daß der Magnetkopf (11) an der freien Bandlänge zwischen Bandrolle (6) und Umlenkrolle (9) vorgesehen ist (Figur 1).

7. Einrichtung nach Anspruch 3 oder 5, dadurch gekennzeichnet, daß zwei Umlenkrollen (9) vorgesehen sind, die im Abstand voneinander angeordnet sind, wobei der Magnetkopf (11) am Band zwischen den Umlenkrollen vorgesehen ist.

8. Einrichtung nach einem der Ansprüche 4, 5 oder 6, dadurch gekennzeichnet, daß die Umlenkrolle (n) (9, 13, 20) ballig ausgebildet ist (sind) und der Magnetkopf (11) am Band zwischen Bandrolle (6) und Umlenkrollen (9 bzw. 13 bzw. 20) vorgesehen ist.

9. Einrichtung nach einem der Ansprüche 1 bis 8, gekennzeichnet durch eine einstellbare Bremsvorrichtung (18, 19 bzw. 25) für jede Umlenkrolle (13 bzw. 20) zur Erzeugung des Hemmoments (Figuren 2 und 3).

## Claims

1. A guide device for a recording medium in tape form, especially a magnetic tape (10), which is subjected to sharp acceleration in the lengthwise direction, comprising at least one guide roll (9, 13, 20) rotatably mounted on bearing means (14, 15 ; 22, 23, 24) around which guide roll the transported tape (10) is guided, wherein a braking torque is produced between the guide roll (9, 13, 20) and the bearing means (14, 15 ; 22, 23, 24), the torque corresponding to a frictional force of from 0.02 to 0.15 N (2 to 15 p), preferably from 0.02 to 0.1 N (2 to 10 p), acting at the guide roll periphery.

2. A device as claimed in claim 1, wherein the guide roll (9, 13, 20) has a surface roughness with a center line average value $R_a$ of less than 0.5 μm, especially of less than 0.28 μm.

3. A device as claimed in claim 1 or 2, wherein the guide roll (20) is provided with flanges (21) for the guidance of the longitudinal edges of the tape, the distance between the flanges being somewhat greater than the width of the tape (Fig. 3).

4. A device as claimed in claim 1 or 2, wherein the flanges (17), for the guidance of the longitudinal edges of the tape, of the guide roll (13) are firmly connected to the bearing means (Fig. 2).

5. A device as claimed in claim 4, wherein the flanges (17) for the guidance of the longitudinal edges of the tape extend around part of the periphery of the guide roll(s) (13) and have ingress and egress chamfers for the tape (10) at their ends.

6. A device as claimed in claim 3 or 5, wherein a single guide roll (9) is provided, and the magnetic head (11) cooperates with the unsupported section of tape extending between the capstan (6) and the guide roll (9) (Fig. 1).

7. A device as claimed in claim 3 or 5, wherein two guide rolls (9) arranged in spatial relationship are provided, the magnetic head (11) cooperating with the span of tape extending between the guide rolls.

8. A device as claimed in any of claims 4, 5 and 6, wherein the guide roll(s) (9, 13, 20) has/have a convex peripheral surface, and the magnetic head (11) cooperates with the span of tape extending between the capstan (6) and the guide rolls (9, 13, 20).

9. A device as claimed in any of claims 6 to 8, wherein an adjustable braking device (18, 19, 23) for the production of the braking torque is allocated to each guide roll (13, 20) (Figs. 2 and 3).

## Revendications

1. Dispositif de guidage pour support d'enregistrement en forme de bande, en particulier une bande magnétique (10) qui doit être soumise à de fortes accélérations dans sa direction longitudinale, dispositif dans lequel est prévu au moins un galet de guidage (9, 13, 20) monté rotatif sur un support (14, 15 ou 22, 23, 24), et sur lequel est guidée la bande transportée (10), caractérisé par un couple de ralentissement entre le galet de guidage (9, 13, 20) et le support (14, 15 ou 22, 23, 24), dont la grandeur correspond à une force de frottement, attaquant la périphérie du galet, comprise entre 0,02 et 0,15 N (2 et 15 ponds), de préférence entre 0,02 et 0,1 N (2 et 10 ponds).

2. Dispositif selon la revendication 1, caractérisé par le fait que le galet de guidage (9, 13, 20) possède une rugosité Ra inférieure à 0,5 μm, en particulier inférieure à 0,28 μm.

3. Dispositif selon la revendication 1 ou 2, caractérisé par le fait que le galet de guidage (20) est muni de rebords de guidage en hauteur (21) qui sont écartés d'une distance un peu supérieure à la largeur de la bande.

4. Dispositif selon la revendication 1 ou 2, caractérisé par le fait que les rebords de guidage en hauteur (17) du galet de guidage sont liés par fixation au support (figure 2).

5. Dispositif selon la revendication 4, caractérisé par le fait que les rebords de guidage en hauteur (17) sont disposés autour d'une partie de la périphérie du (des) galet(s) de guidage (13) et, au début et à la fin du rebord de guidage, sont prévus des biseaux d'entrée et de sortie par la bande (10).

6. Dispositif selon la revendication 3 ou 5, caractérisé par le fait qu'il n'est prévu qu'un seul galet de guidage (9) et la tête magnétique (11) est prévue sur la longueur libre de la bande, entre le rouleau (6) et le galet de guidage (9) (Fig. 1).

7. Dispositif selon la revendication 3 ou 5, caractérisé par le fait que sont prévus deux galets de guidage (9), qui sont disposés à distance l'un de l'autre, la tête magnétique (11) étant prévue sur la bande entre les galets de guidage.

8. Dispositif selon l'une des revendications 4, 5 ou 6, caractérisé par le fait que le (les) galet(s) de guidage (9, 13, 20) est (sont) de forme bombée et la tête magnétique (11) est prévue sur la bande, entre le rouleau de bande (6) et le galet de guidage (9 ou 13 ou 20).

9. Dispositif selon l'une des revendications 6 à 8, caractérisé par un moyen de freinage réglable (18, 19 ou 23) pour chaque galet de guidage (13 ou 20), pour produire le couple de ralentissement (Fig. 2 et 3).

FIG.1

FIG.2

FIG.3

FIG.4

FIG.5a

FIG.5b